# EUROPEAN PATENT APPLICATION

(11) **EP 2 386 749 A1**
(43) Date of publication of application: **16.11.2011**
(21) Application number: 09837281.6
(22) Date of filing: 08.01.2009
(51) Int. Cl.: F03D 1/04, F03D 3/04, F03D 9/00, F03D 11/04

(54) **AIR CURRENT GENERATING SYSTEM AND METHOD**

(71) Applicant: Peng, Jianning, Guangdong 518026 (CN)
(72) Inventor: Peng, Jianning, Guangdong 518026 (CN)
(74) Representative: Hryszkiewicz, Danuta
(86) International application number: PCT/CN2009/070078
(87) International publication number: WO 2010/078723

(57) **Abstract**

An air current generating system and method, includes an air source, a passage (105), at least a motor-less air pump device (104) and at least a turbine generating set (102, 103); the passage has an air current inlet connected with the air source and an air current outlet; the motor-less air pump device is mounted at the air current outlet and in the natural wind; the turbine generating set at least includes a rotating blade provided in the passage; the motor-less air pump device is driven by the air current from the air source and/or the outside wind to form negative pressure in the passage, absorbs air from the air source continuously and forms an air current in the passage, wherein the air current rotates the rotating blade to drive the turbine generating set to generate electricity.

## Description

### BACKGROUND OF THE INVENTION

The invention relates to an airflow power generation system and an airflow power generation method, and more particularly, to an airflow power generation system and method by utilizing the temperature difference, gasflow with pressure or/and natural wind (including breeze).

Description of the Related Art

With the rapid development of economy, the shortage of fossil fuels such as coal and oil is increasing.The consumption of non-renewable energy source threatens seriously the development of human beings. Furthermore, the utilization of conventional fuels results in a series of environmental pollution, greenhouse gas emission which constrains social and economic development.

Nowadays, solar power generation and wind power generation are currently widely used, however, the power generation by utilizing one single clean energy has some limitation.

In spite of solar pv technology being mature, but now its cost is expensive, financial subsidy from government is need, the real commercialization application is not realized temporarily. Meanwhile, Some poisonous materials are generated during production of silicon cells. Moreover, solar thermal power generation has high production cost, complicated structure, and large occupancy land, all of these seriously limit the popularization of solar thermal power generation. In addition, the solar thermal power station is normally built in a remote region, which requires long-distance power transmission and transformation lines and, thereby increasing investment cost and reducing superiority of competition.

Moreover, the wind power generation has the following disadvantages:

1) limited wind source affects the wind power gengeration thereof.

2) a wind power generator requires an enough starting-up wind speed.

3) a wind power generation unit (comprising a support frame, and a tower) must have enough strong structure.

4) a wind power station is normally built in a remote region, which requires long-distance power transmission and transformation lines and equipments, and thus increasing investment cost, and reducing superiority of competition.

5) since wind conditions in towns which needs a large amount of power supply are poor, operation efficiency of the wind power generator therein is lot, in addition, as severe wind occurs, large noise is to be generated.

In addition, a lot of energy (including waste discharge energy) are not be utilized fully in daily life.

For example in the summer, open-air object surface (such as expressway pitch road, airport cement road, square, the roof and wall of building) is more hot.

And for example in summer (or winter), when air conditioner or heat pump is be used for adjusting the indoor temperature, the gasflow produced by air-cool air conditioner or heat pump is discharged directly, meanwhile it probably influence the surrounding.

The low cost of power generation by the clean energy not only has stronger competitive advantage, but also impel the power generation by the clean energy not to rely on policy support and financial subsidy from the government too much for its commercialization and marketization application. Meanwhile it can also arouse the enthusiasm of utilizing the clean energy consciously.

### SUMMARY OF THE INVENTION

The invention describes an airflow power generation system and method by utilizing the temperature difference, gasflow with pressure or/and natural wind (including breeze) ; and the feature of complementary power generation so as to overcome unicity and limitation of a single clean energy

An airflow power generation system, comprising a gas source, a channel, at least one unpowered ventilator, and at least one turbo-generating set.

The said channel comprises an airflow inlet and an airflow outlet, and said airflow inlet is connected to said gas source; the said unpowered ventilator is disposed at said airflow outlet, and the unpowered ventilator is in a natural wind field; at least rotating blades of said turbo-generating set are positioned inside said channel.

The unpowered ventilator operates to rotate under the action of an airflow from said gas source and/or natural wind, to form negative pressure in said channel, to intake gas from said gas source, to form airflow in said channel, to push said rotating blades to rotate via said airflow, and to drive said turbo-generating set to generate power.

An airflow power generation method, comprising:
S1: providing a gas source for producing airflow;
S2: a channel being connected to said gas source, said airflow entering said channel via an airflow inlet of said channel;
S3: providing at least one unpowered ventilator, said unpowered ventilator being connected to an airflow outlet of said channel; and
   said unpowered ventilator rotating under the action of an airflow from said gas source and/or natural wind,forming negative pressure in said channel, intaking gas continuously from said gas source, and forming airflow in said channel;
S4: providing a turbo-generating set, at least rotating blades of said turbo-generating set being positioned inside said channel, said airflow generated in step S3 driving said rotating blades to rotate thereby driving said turbo-generating set to generate power.

Advantages of the invention comprise:

1. Due to the temperature difference between inside and outside of the channel and/or natural wind (including breeze), the unpowered ventilators are driven to generate airflow continuously in the channel,then the airflow drives the turbo generating set to generate power complementarily so that the turbo generating set is capable of continuously and stably generating power, and reducing dependency on weather, thus overcoming unicity and limitation of a single clean energy.

2. The heat source of the invention can be from a solar air collector (comprising medium-temperature and high-temperature solar air collector), a heat transfer device in a heat source (such as geotherm or waste discharge heat source), hot waste gas (including smoke) and so on, even heat absorbed by the surface and inner of an object being heated.

3. A sufficient of number of unpower ventilators are able to generate airflow with adequate flowing velocity so as to drives the turbo generating set to generate power.; The flowing velocity of the airflow can be controled timely and effectively by the control device or the valve.

4. Some turbo-generating sets, or a turbo-generating set with two or more group of rotating blades of the turbo-generating set can be disposed, whereby improving generating efficiency and generating capacity of the system.

5. The turbo-generating set can be disposed at a vertical part of the system, or at a horizontal part of the system, even at any appropriate position of the system.

6. The rotating blade of the turbo-generating set is supported inside the channel, the power generator is disposed outside the channel, which prevent the generator from operating at high temperature for a long time, decrease its working temperature thereof during operation, and make it convenient to repair and maintain the generator timely.

7. The power generation is be used on site, and no transmission and transformation line and equipment are required.

8. The system of the invention can be installed directly on the roof of a building in town for generating power, and its effect on surrounding environment is little, and it does not occupy land; moreover, It can reduce temperature rise of external wall and the roof of the building, and decrease indoor air-conditioning load, the invention can be applied to new buildings, and to existing buildings for energy saving reformation.

9.The same system of the invention can be used for supplying heat in the winter, and for generating power in the summer, which improves its service efficiency of the equipment and its rate of return on investment, and arouse the enthusiasm of utilizing the clean energy consciously.

10. Simple structure of the system, and low investment cost, and complete application of the conventional environment protection materials, easy installation, long work life, convenient operation and maintenance, and low cost, and easy promotion for wide application.

### BRIEF DISCRIPTION OF THE DRAWINGS

Further description of the invention will be given below in conjunction with accompanying drawings.

FIGS. **1A** to **1C** are schematic views of an airflow power generation system of a first embodiment of the invention;

FIG. **2A** is a schematic view of an airflow power generation system of a second embodiment of the invention in a tropical or a subtropical region;

FIG. **2B** is a cross-sectional view of FIG. **2A** along an A-A line;

FIG. **2C** is a cross-sectional view of FIG. **2A** along an B-B line;

FIG. **2D** is a schematic view of an airflow power generation system of a second embodiment of the invention in other regions (such as regions preventing icy roads in the winter);

FIG. **3A** is a plane diagram of an airflow power generation system of a third embodiment of the invention;

FIG. **3B** is a elevation diagram of an airflow power generation system of a third embodiment of the invention;

FIG. **4** is a schematic view of an airflow power generation system of a fourth embodiment of the invention in a region needing for supply of heat in the winter;

FIG. **5A** is a plane diagram of an airflow power generation system of a fifth embodiment of the invention;

FIG. **5B** is a cross-sectional view of FIG. **5A** along a C-C line;

FIG. **6** is a schematic view of an airflow power generation system of a sixth embodiment of the invention; and

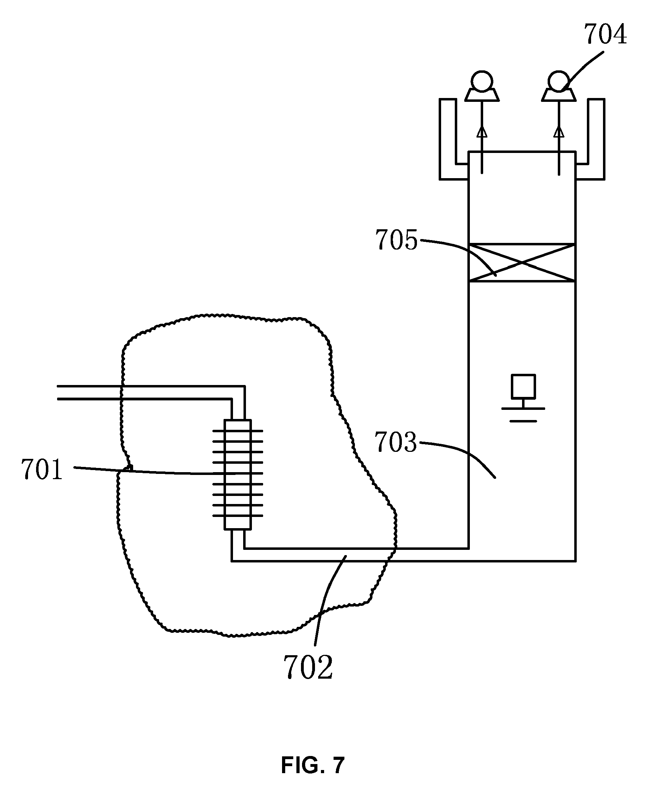

FIG. **7** is a schematic view of an airflow power generation system of a seventh embodiment of the invention.

### DETAILED DESCRIPTION OF THE INVENTION

Working principle of the invention is described bellow- When there is only a heat source and no natural wind, air in a heat source absorbs heat to expand continually to go into the channel, the temperature difference produced by the hot air between inside and outside of the channel drives unpowered ventilator which are positioned at the outlet of the channel to rotate to exhaust the hot air at its suction opening and to produce negative pressure in the channel, then air is absorbed continuously into the channel via the heat source, thus hot airflow for driving a turbo-generating set to generate power is formed in the channel. When there is only natural wind and no heat source, natural wind (including breeze) in any direction drives the unpowered ventilator to rotate to form negative pressure in the channel, then air is absorbed continuously into the channel via the airflow inlet of the channel, thus airflow for driving a turbo-generating set to generate power is formed in the channel.When there are a heat source and natural wind at the same time, thermal expansion of hot air and natural wind (including breeze) simultaneously drive the unpowered ventilator to rotate, thus hot airflow for driving a turbo-generating set to generate power is formed in the channel.Similary, when there is a waste gasflow with pressure, the waste gasflow with pressure is used as a gas source, at least under the action of external wind (including breeze), the unpowered ventilator is driven to produces negative pressure at its suction opening so as to lead the waste gasflow with pressure continually to go through the channel to be exhausted via its suction opening,and the gasflow with comparatively high flowing velocity is produced in the channel, thus the gasflow with comparatively high flowing velocity is capable of driving a turbo-generating set to generate power.

In the invention, either natural wind (including breeze) and temperature difference between inside and outside of the channel produced by heat source (such as solar energy, geotherm, hot spring, waste heat source (including smoke)), or natural wind (including breeze) and waste gasflow with pressure (such as waste gasflow discharged by air conditioner or heat pump),or natural wind (including breeze), drive at least one unpowered ventilator to exhuast so as to produce the gasflow in the channel, thus the gasflow is capable of driving a turbo-generating set to generate power, meanwhile the unicity of solar power generation or wind power generation is overcomed.

Note: the heat source or the waste gas source comprises multiple heat sources or multiple waste gas sources. Moreover, there is a heat source, heat storage materials can be positioned at appropriate positions in the channel or in the heat source in order to improving thermal collection performance of the system. As the heat source is a solar air heat collection device (comprising medium-temperature and high-temperature solar air collector), a solar automatic tracking system can be installed at the solar air heat collection device, whereby improving thermal collection effect thereof.

In addition, enough untower ventilators are capable of increasing the flowing velocity of the gasflow in the channel. Further the flowing velocity of the gasflow can be adjusted by utilization of the control device or the valve on the channel so that the gasflow can be controled timely and effectively, keeps uniform approximately, and then overcomes the limitation of wind power generation.

As required (such as typhoon occurs), the valve in the channel or at the suction opening of the unpowered ventilator is timely closed for protecting the turbo generating set. The protecting sleeve of the unpowered ventilator is lifted for preventing the unpowered ventilator from being destroyed, and thus all of these improve working life of the system.

As the design flowing velocity of the airflow is high enough, multiple turbo-generating sets are installed in series or parallel, or a turbo-generating set with more than two group of rotating blades (such as one group of big rotating blades and another group of small rotating blades) is installed,furthermore an annular airflow fence is installed for increasing the speed of the turbo-generating set. In addition, when there are multiple heat sources or waste gas sources, multiple turbo-generating sets can be installed parallel for improving generating efficiency and generating capacity.

In addition, as required, a vertical or a horizontal turbo-generating set is selected so that the turbo-generating set can be installed in the vertical part or the horizontal part of the channel, even at any appropriate position.

By the sealed bearing brackets of the rotor of the turbo-generating set, the rotating blade is supported inside the channel, other components of the turbo-generating set is positioned outside the channel. At this time, the rotor of the generating set is perpendicular to the airflow so that the generator is prevented the from operating at high temperature for a long time, and its working temperature during operation is decreased directly, it is convenient to repair and maintain the the turbo-generating set timely.

In addition, there are at least one bypass system which is connected with the front end and the back end of the turbo-generating set. The regulare closed space in these bypass system is utilization to heat the material.Thus the same system can be used for supplying heat in the winter, and for generating power in the summer, which improves its service efficiency of the equipment and its rate of return on investment, and arouse the enthusiasm of utilizing the clean energy consciously.

As required,the above technical properties are selected to combine in the practical application.

Detailed description of the invention will be given below in conjunction with specific embodiments.

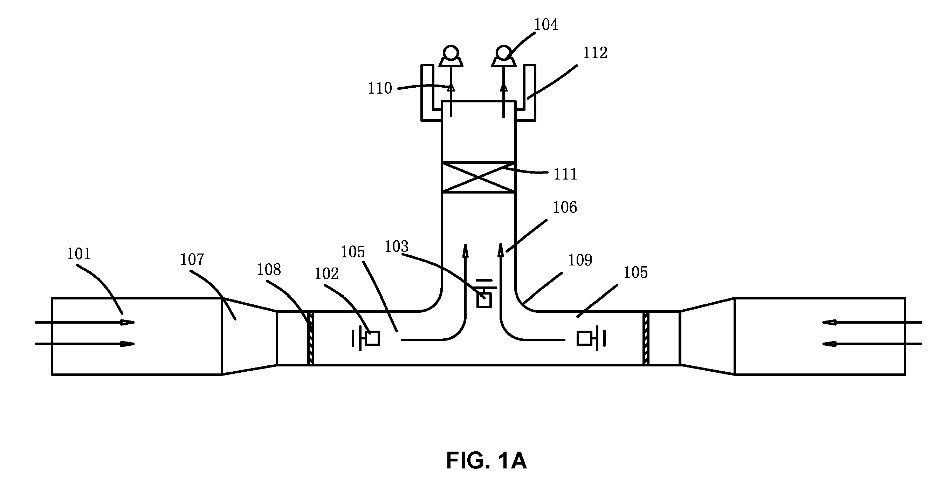

As shown in FIGS. **1A - 1C****,** in the first embodiment of the invention,application of the invention in gobi, desert, and islands is illustrated.

In gobi, desert, and islands,although there is open land, rich solar resource (solar radiation intensity can be up to 500 - 600 W/m²), and better wind resource, but so far some advantages are not used fully. The purpose of this embodiment is that solar resource, wind resource and heat absorptivity of sand are utilized simultaneously to produce the airflow in the system so as to drive the turbo-generating set to generate power. So the system is capable of operating continuously, generating power stably, reducing dependency on weather, and increasing generating capacity of a complementary heat-wind generation set.

As shown in FIG. **1A****,** the gas source is from the solar air heat collection devices **101** (eg.made of Solarwall), and heat storage material **115** is disposed in the solar air heat collection device **101.** Each of the solar air heat collection devices **101** is connected to a chimney **106** via a pipe **105,** all of the pipes **105** and the chimney **106** constitute a channel. The pipe **105** is connected to the outlet of the solar air heat collection device **101** via a concentric reducer **107.** An annular airflow fence **108** and a horizontal turbo-generating set **102** with two group of rotating blades are positioned properly inside the pipe **105.** The pipe **105** is connected to the chimney **106** via an elbow **109.** Appropriate vertical turbo-generating sets **103** are positioned in the bottom of the chimney **106.** Appropriate unpowered ventilators **104** are evenly distributed to be positioned on the closed top of the chimney **106,** and a check valve **110** is disposed at a suction opening of the unpowered ventilator **104.** A regulating valve **111** is disposed at an appropriate position in the chimney **106,** and is applied to adjusting (including opening, closing) the airflow in the pipe **105** as the airflow control device.A protecting sleeve **112** which is capable of ascending or descending is disposed at an appropriate position at the outside of the upper part of the chimney **106.**

Furthermore a control valve is disposed solely at the suction opening of each unpowered ventilator **104,** by adjusting flowing velocity (including opening, closing) of airflow at the suction opening, flowing velocity of airflow in the channel is controlled in order to improve power generation efficiency, and protect the equipments.

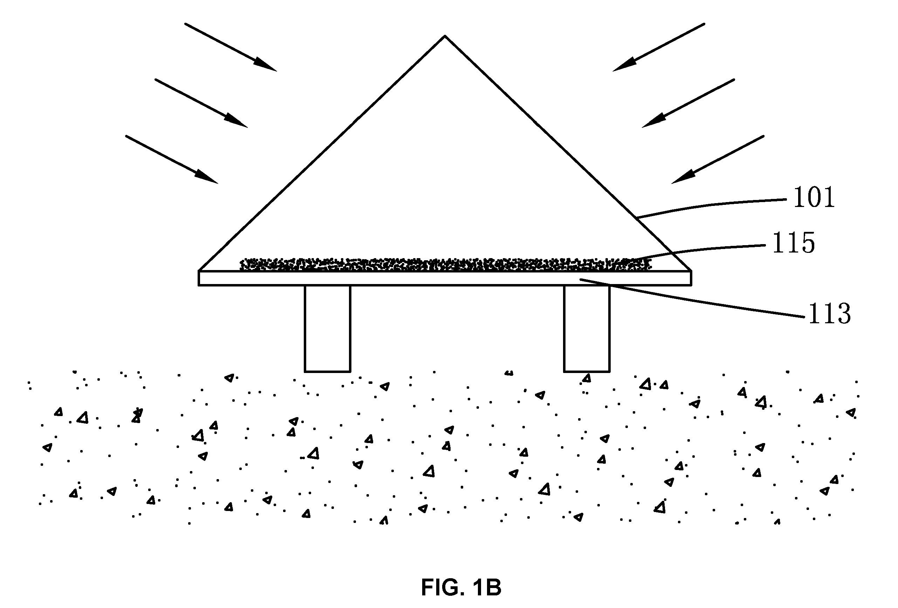

As shown in FIG. **1B****,** application of the invention in a desert is illustrated.

To prevent the solar air heat collection device **101** from being covered by sands, the solar air heat collection device **101** is disposed on a platform **113,** two solar air collectors and the platform form a triangle, the heat storage materials **115** is disposed on the platform, and each solar air collector is disposed at the optimum angle for absorbing sunshine, which ensure the system can adequately absorb heat generated by direct radiation of sunshine, and diffusion of sands.

It should be understood that the solar air heat collection device **101** can comprise multiple solar air collectors,.and diffent shape of the device.

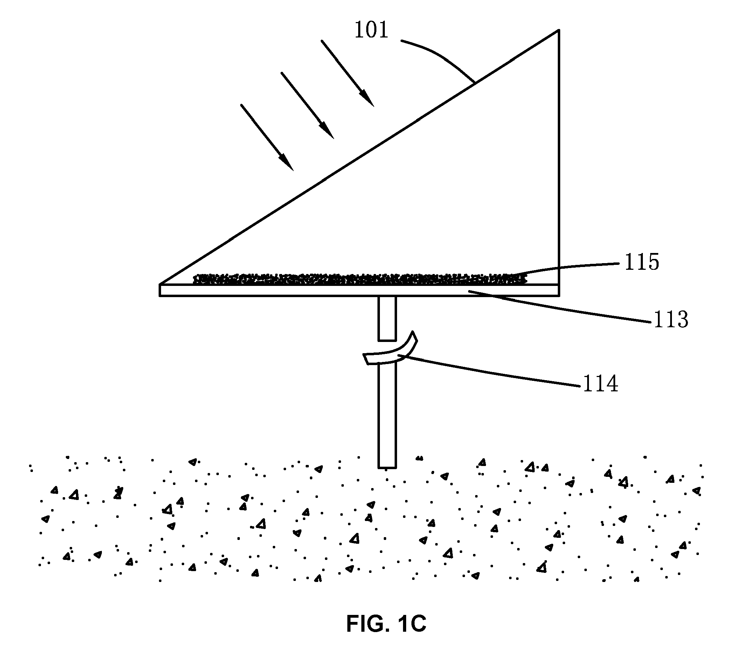

As shown in FIG. **1C****,** application of the invention in gobi and islands is illustrated.

The solar air collector is disposed at the top of the solar air heat collection device **101,** and the heat storage materials **115** are disposed at the bottom thereof. A solar automatic tracking system **114** is disposed below the device for tracking the sunshine automatically, whereby improving heat collecting effect of the solar air heat collection device.

As there is sunshine and no wind, since air in the solar air heat collection device 101 is heated to expand, then hot air passes throngh the pipe 105 and the chimney 106 to drives the unpowered ventilator 104 to rotate to exhaust hot air at it suction opening,then negative pressure is produced in the channel so that the air is absorbed continuously into the solar air heat collection device 101,and form hot airflow in the channel. As there are sunshine and natural wind (comprising breeze), expansion of hot air in the channel and natural wind (comprising breeze) simultaneously drive the unpowered ventilator 104 to rotate so as to produce hot airflow in the channel. As there is no sunshine, natural wind (comprising breeze) drives the unpowered ventilator 104 to rotate to produce airflow in the channel. Therefore the airflow in the channel can drive the turbo-generating set 102 to generate power in the manner of a complementary heat-wind generation.

The airflow direction is indicated by the arrow in Figure.

By use of the regulating valve **111,** the flowing velocity of the airflow in the channel is adjusted timely and effectively so as to keep approximately constant. As required (such as typhoon occurs), the regulating valve **111** can be timely closed, and the protecting sleeve **112** is lifted whereby protecting the equipments.

It can be seen that in this invention, heat source (including solar energy) and wind energy can be simultaneously utilized to produce airflow to generate power in a complementary way so that the complementary heat-wind generation set can work continuously,generate power stably, reduce dependency on weather, and overcome the unicity and limitation of solar chimney power generation and wind power generation.

The invention has the following advantages in contrast with solar chimney power generation:

1.an active hot airflow is produced without motivity;.

2. natural wind (including breeze) is utilized simultaneously to produce the airflow so as to generate power in the manner of a complementary heat-wind generation;

3. no erection of bulky solar chimney,only erection of a low chimney 106, which greatly reduces construction difficulty, and construction and maintenance cost;

4. the design flowing velocity of airflow can be enhanced artificially,and the flowing velocity is controled effectively, which improves power generation efficiency, and protects the equipments;

5. the turbo-generating set can be disposed at a vertical or horizontal part of the channel;

6. multiple turbo-generating sets can be installed in series or parallel in the channel;

7. low construction cost, simple structure,small floor space,suitable installation near a town, easy promotion for wide application;

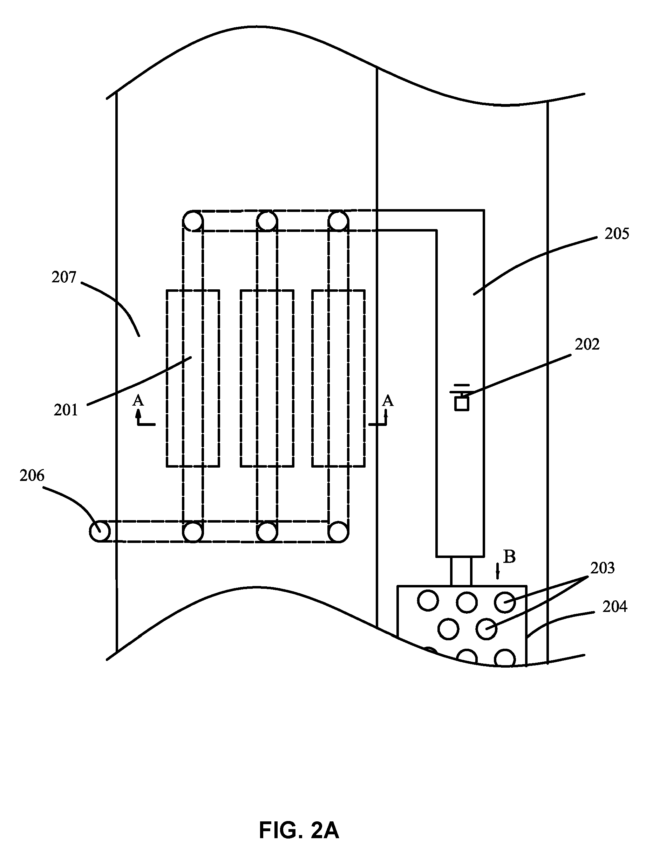

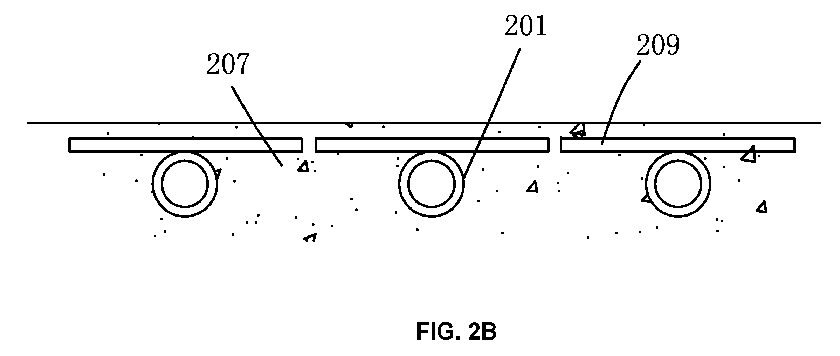

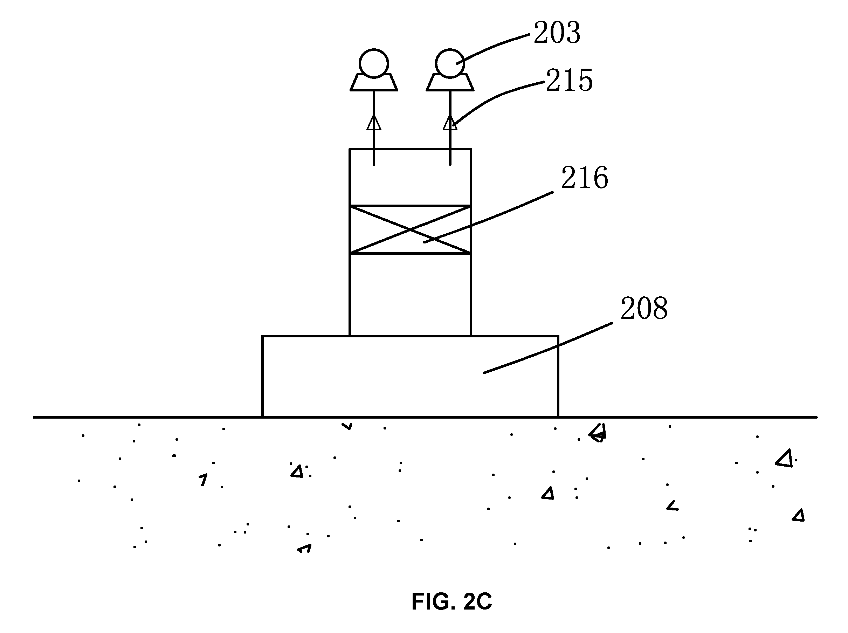

As shown in FIGS. **2A - 2D****,** in the second embodiment of the invention,a highway (including a piazza, a city road,an airport runaway, and so on) is used for generating power,and is prevented from icy road.

The highway is open, and has a good wind source In the summer, road surface of the highway are very hot (sometimes up to 60°C), and tyre burst often occurs, moreover, in cold winter, roads often become ice road, which affects transportation and driving safety.

An objective of this embodiment is that in a tropical or a subtropical region, the heat absorbed by the road and wind source are utilizated adequately for power generation,and in other region,the solar air heat collection devices which are positioned on the isolation belt of the highway are utilizated for the complementary heat-wind power generation in the summer, and for preventing icy road in the winter.

As shown in FIGS. **2A - 2C****,** application of the invention in a tropical or a subtropical region (such as regions in which icy road does not occur in the winter) is illustrated.

Proper metal pipes **201** are buried inside the shallow basebed of a road **207**, each metal pipe is connected with a heat exchange plate **209,** the inlet **206** of the metal pipe **201** is disposed at an appropriate position on the roadside. All outlets of the metal pipes **201** in parallel are connected to the inlet of the pipe **205** which is positioned on the isolation belt **208,** and the outlet of the pipe **205** is connected to a bellows **204** which is vertically installed in the isolation belt **208.** The road **207** serves as heat source to heat the air in the metal pipe **201** so as to form hot gas source. The pipe **205** serves as a channel, a appropriate number of turbo-generating sets **202** are installed inside the part of pipe **205** which is located on the the isolation belt **208.** An appropriate number of unpowered ventilators **203** are disposed at the top of the bellows **204,** and are positioned in parallel and interlace mode. A check valve **215** is disposed at the suction opening of the unpowered ventilator **203** for preventing reverse flow.An regulating valve **216** is installed inside the bellows **204,** and a protecting sleeve which is capable of descending and ascending is disposed at an appropriate position at outside of the upper part of the bellows for protecting the unpowered ventilator **203,**

In the system of the invention, the road **207** is utilized as a heat source effectively, meanwhile natural wind (including breeze) is utilized as well, both of them can complement with each other for driving the unpowered ventilator **203** to rotate to produce airflow in the system, then the airflow can drive the turbo-generating set **202** to generate power continuously and stably.

It should be noted that, power generated by the turbo-generating set **202** can be applied to illumination of the highway, an indication board, a (wireless) electronic bulletin board, a monitoring system, a toll gate, or even advertisement, and so on, which will not only contributes to smooth road and traffic safety,increasing income,but also to reducing road surface temperature timely, preventing tyre burst and decreasing the occurrence of safety accidents. Meanwhile, no long-distance power supply line is required, which greatly reduces investment cost.

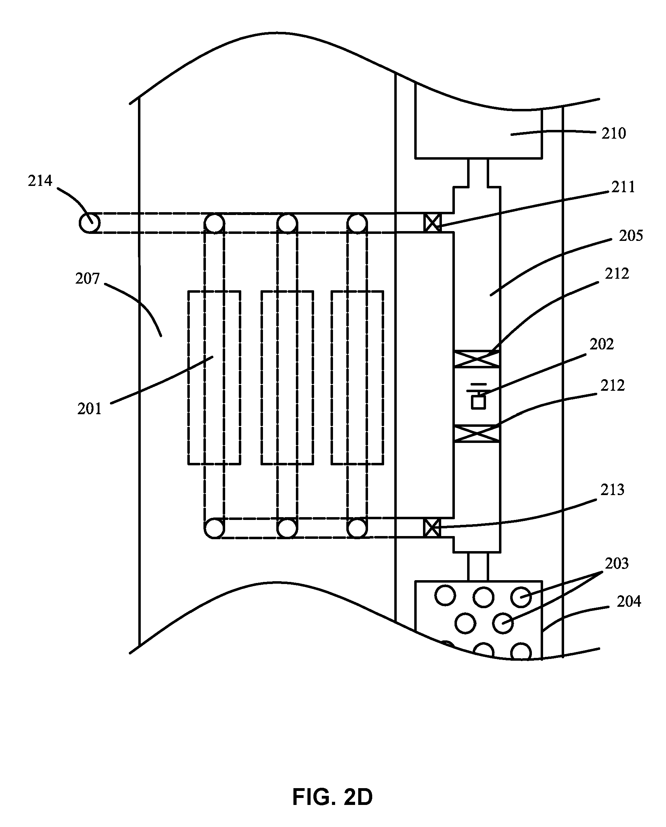

As shown in FIG. **2D****,** application of the invention in other regions (such as regions preventing icy roads in the winter) is illustrated.

The solar air heat collection device **210** (including medium-temperature and high-temperature solar air collectors) are positioned in the isolation belt **208** of the highway, the air outlet of the solar air heat collection device **210** is connected to the bellows **204** (erected on the isolation belt **208**) via the pipe **205** (positioned on the isolation belt **208.** An appropriate number of turbo-generating sets **202** are disposed in the pipe **205,** a pair of first valves **212** are disposed in front and at back of the turbo-generating set **202.** An appropriate number of metal pipes **201** are buried inside the shallow basebed of the road **207,each** metal pipe is connected with a heat exchange plate **209.** All the metal pipes **201** are installed in parallel, and constitute a regular closed space. The air intake of the regular closed space is connected to the outlet of the solar air heat collection device **210** via a second valve **211,** and the air outlet of the regular closed space is connected to the inlet of the bellows **204** via a third valve **213.** Thus, the regular closed space becomes a bypass system of the pipe **205** in which the turbo-generating sets **202** are installed. An appropriate number of unpowered ventilators **203** are disposed at the top of the bellows **204,** and are positioned in parallel and interlace mode. A check valve **215** is disposed at a suction opening of the unpowered ventilator **203.** An regulating valve is installed inside the bellows **204,** and a protecting sleeve which is capable of descending and ascending is disposed at an appropriate position at outside of the upper part of the bellows,

In a season without icy road, after the second valve **211** and the third valve **213** are closed, the solar air heat collection device **210** is utilized as a heat source, meanwhile natural wind (including breeze) is utilized as well, both of them can complement with each other for driving the unpowered ventilator **203** to rotate to produce airflow in the system, then the airflow can drive the turbo-generating set **202** to generate power continuously and stably.

Alternatively, an backup air intake **214** is disposed on the roadside. After the backup air intake **214,** and the second valve **211** are opened, the solar air heat collection device **210** and the regular closed space are utilized simultaneously as heat source to generate power.

In a season with icy road, after the first valves **212** which are disposed in front and at back of the turbo-generating set **202** are closed, the solar air heat collection device **210** serving as heat source and natural wind (including breeze) produce the hot airflow in the regular closed space so that all the metal pipes **201** and the heat exchange plates **209** in the regular closed space are timely heated for preventing icy road.

It should be noted that under such weather conditions, geotherm in the vicinity of the highway or smoke can be used as heat source. The hot air produced by geotherm or smoke passes through the backup air intake **214** to heat the road **207** timely for preventing icy road. The auxiliary air intake **214** is connected to hot air heated via geotherm or smoke, and timely heats the road **207,** whereby preventing it from freezing.

Moreover, since interval between the bellows **204** on the isolation belt **208** is comparatively large, and the pipe **205** and the solar air heat collection device **210** are installed closely the isolation belt **208,** the influence of the system on a driver is very small.

Therefore, in this embodiment heat source (such as the heat absorbed by the surface of a highway, solar energy, even the heat produced by other high-temperature object) is utilized not only to generate power, but also to prevent icy road,thus this kind of system which can supply heat in the winter and generates power in the summer improves service efficiency of the equipment and rate of return on investment, arouse the enthusiasm of utilizing the clean energy consciously, and make waste profitable.

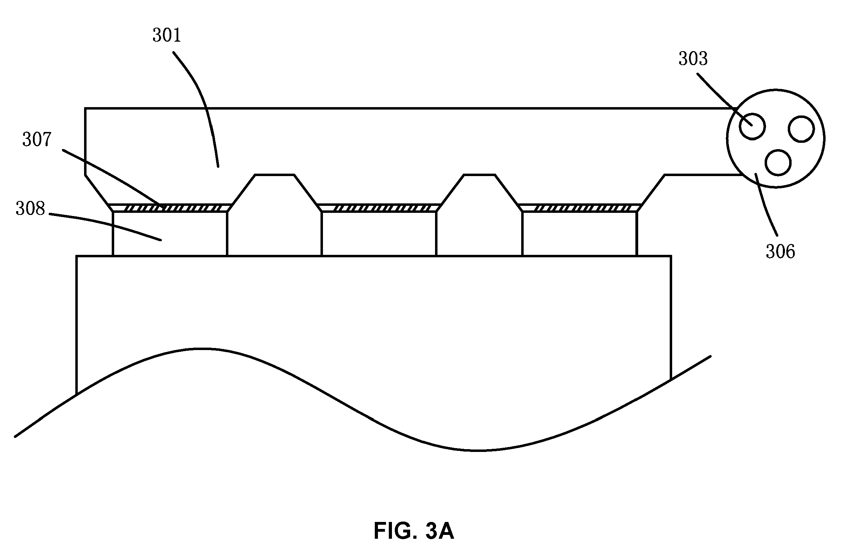

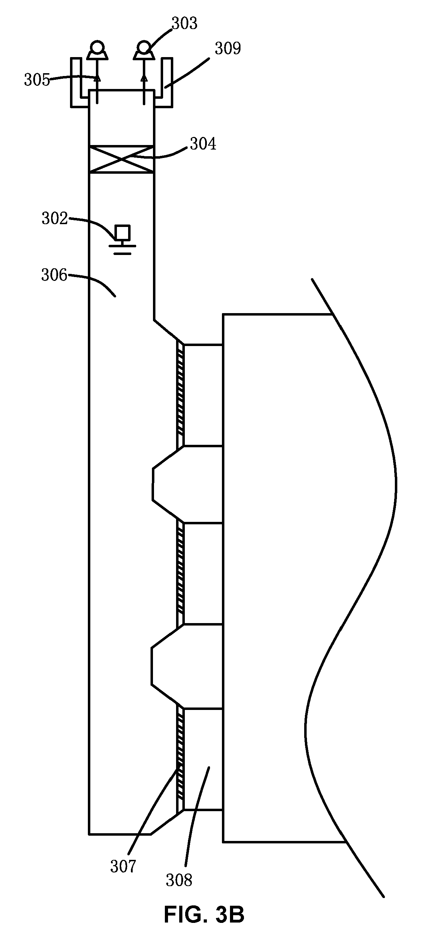

As shown in FIGS. **3A** and **3B****,** in the third embodiment of the invention, waste gas discharged by an air-cooled air conditioner or a heat pump is utilized to generate power.

In the summer and the winter, air-cooled air conditioners or heat pumps are used for adjusting the indoor temperature, almost all waste gas produced by the air-cooled air conditioners or the heat pumps are directly discharged into air and not adequately utilized, and the waste airflow affects surrounding environment.

An objective of the invention is to make full use of the waste gas with pressure for generating power.

As shown in FIGS. **3A** and **3B****,** each of the air inlets of the air duct 301 on each floor is opposite to the exhaust outlet of an air conditioner or a heat pump **308,** waste gas discharged from the exhaust outlet is used as gas source. An unidirectional loose-leaf damper **307** is disposed at each of the air inlets. The air duct **301** on each floor is connected to a chimney **306.** The air duct **301** and the chimney **306** serve as a channel. An appropriate number of turbo-generating sets **302** are installed inside the air duct **301** and/or inside the chimney **306.** An appropriate number of turbo ventilators **303** are disposed at the top of the chimney **306** (higher than a building), a stop valve **304** and a check valve **305** are disposed at a suction opening of the turbo ventilator **303.** A protecting sleeve **309** capable of ascending and descending is disposed at an appropriate position at outside of the upper part of the chimney **305.**

As an air conditioner or a heat pump **308** of a building starts operating, waste gas with pressure discharged therefrom blows open the corresponding unidirectional loose-leaf damper **307** to enter the air duct **301,** and other unidirectional loose-leaf dampers **307** prevent waste gasflow in the air duct **301** from flowing out. At this time, the turbo ventilator **303** leads and exhausts the waste gasflow in the air duct **301** from the chimney **306** continuously so that the gasflow with comparatively high flowing velocity is produced in the system to drive the turbo-generating set **302** to generate power.

By use of opening or closing of the stop valve **304,** the working mode of the corresponding turbo ventilator **303** is changed so that the system is controled effectively. As all stop valves **304** are closed, the turbo-generating set **302** can be protected.

It should be noted that power generated by the turbo-generating set **302** can be used for illumination in or outside a building, and outside surface of the air duct **301** on each floor can be made into a decorating plate or a bill board whereby improving outlook of the building and increasing income.

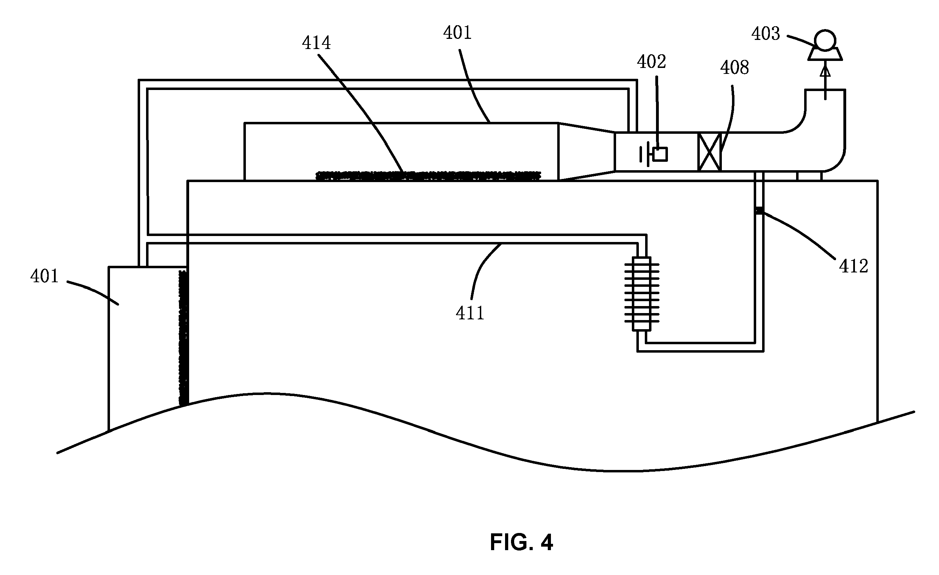

As shown in FIGS. **4****,** in the fourth embodiment of the invention,the outer wall and the roof of a building is utilized for for heat insulation and power generation in the summer, and for indoor heat supply in the winter.

In the hot summer, surface temperature of the outer wall and the roof of a building is comparatively high. As a result, indoor temperature arises correspondingly, which increases working load of an air conditioner, and consumes more power.

An objective of this embodiment is that in a tropical or a subtropical region, heat absorbed by the outer wall and the roof of a building and available natural wind above the building are utilized adequately for generating power, in other region, the solar air heat collection devices which are positioned on the outer wall and the roof are utilized for a complementary heat-wind power generation in summer and indoor heat supply in the winter.

Application of the invention in a tropical or a subtropical region (or a region without heating supply in the winter) is illustrated.

A thermal insulation interlayer in which air can flow (such as a double-layered glass curtain wall, or a (colorful) metal plate or an absorber plate which is installed above the surface of a building with receiving better solar radiation), is positioned on the outer wall and the roof of a building, the openings on both ends of the thermal insulation layer are closed, and the air intake and the air outlet of the thermal insulation interlayer are disposed at an appropriate position, the air outlet of the thermal insulation interlayer is connected to the inlet of the bellows via pipe (serving as a channel), the bellows erected on the roof is a little higher than the structural elementon on the roof of the building (such as wall). An appropriate number of the turbo ventilators are positioned on the top of the bellows, and are positioned in parallel and interlace mode, a check valve is disposed at a suction opening of the turbo ventilator. An appropriate number of turbo-generating sets are disposed in the part of pipe which is located on thr roof. An regulating valve is disposed on a pipe between the turbo-generating set and the bellows . A protecting sleeve capable of ascending and descending is disposed at an appropriate position at outside of the upper part of the bellows.

Due to continuous solar radiation, air in the thermal insulation interlayer is heated to drive the turbo ventilator to rotate, meanwhile natural wind also drives the turbo ventilator to rotate, thus a hot airflow is produced in the pipe. As no sunshine exists, natural wind (comprising breeze) drives the turbo ventilator to rotate to produce negative pressure in the pipe so that air is sucked into the pipe to produce an airflow. Thus, airflow produced in the pipe drives the turbo-generating set to generate power, meanwhile heat absorbed by the outer wall and the roof of the building is taken away timely for reducing its temperature rise, heat insulation, being helpful for building energy conservation.

The regulating valve effectively controls flowing velocity of the airflow in the pipe. As required, the regulating valve and the protecting sleeve protect the equipments.

It should be noted that if cheap conventional materials are used, investment cost can be reduced, and the enthusiasm of utilizing the clean energy consciously is aroused.

As shown in FIG. **4****,** application of the invention to a region with heating supply is illustrated.

The solar air heat collection devices 401 are installed on the outer wall and the roof of a building with receiving better solar radiation, heat storage materials **414** are disposed in the solar air heat collection devices 401, and a bypass system **411** is located between the outlet of the solar air heat collection device **401** and the air intake of the bellows. The valves **412** are installed respectively in the inlet and the outlet of the bypass system **411,** and a heat exchanger **413** is disposed in the bypass system **411.**

In the summer, the valves **412** on the bypass system **411** are closed, the solar air heat collection device 401 is utilized as a heat source, meanwhile natural wind (including breeze) is utilized as well, both of them can complement with each other for driving the unpowered ventilator **403** to rotate to produce airflow in the system, then the airflow can drive the turbo-generating set **402** to generate power.

In the winter, the regulating valve **408** is closed, and the valves **412** on the bypass system **411** are opened, the solar air heat collection device 401 and the natural wind (comprising breeze) generate hot airflow in the bypass system **411,** and supply heat to the heat exchanger **413.**

This embodiment can be applied not only to new buildings, but also to existing buildings for energy saving reformation.

Advantages of the invention in contrast with wind power generation comprise:

1. not only wind energy, but also heat source such as solar energy, geotherm, waste heat source (including smoke) and waste gas with pressure can be used for complementary heat-wind power generation, and thus overcoming unicity of wind power generation.

2. wind (including breeze) in any direction can be transformed into kinetic energy of airflow, and then the airflow is used for power generation, which effectively overcome limitation of the wind power generation.

3. by installing enough number of unpowered ventilators, airflow with adequate flowing velocity can be produced to drive the turbo generating set to generate power.

4. the flowing velocity of the airflow in the system can be controlled, and the system can be timely closed whereby protecting equipments such as the turbo-generating set and so on.

5. the system can be used in cities, and almost no noise is produced so that no influence on environment exists.

6. the system is simple, and no bulky support is needed, and thus investment cost is low, repairing is convenient, and the invention is easy for wide application.

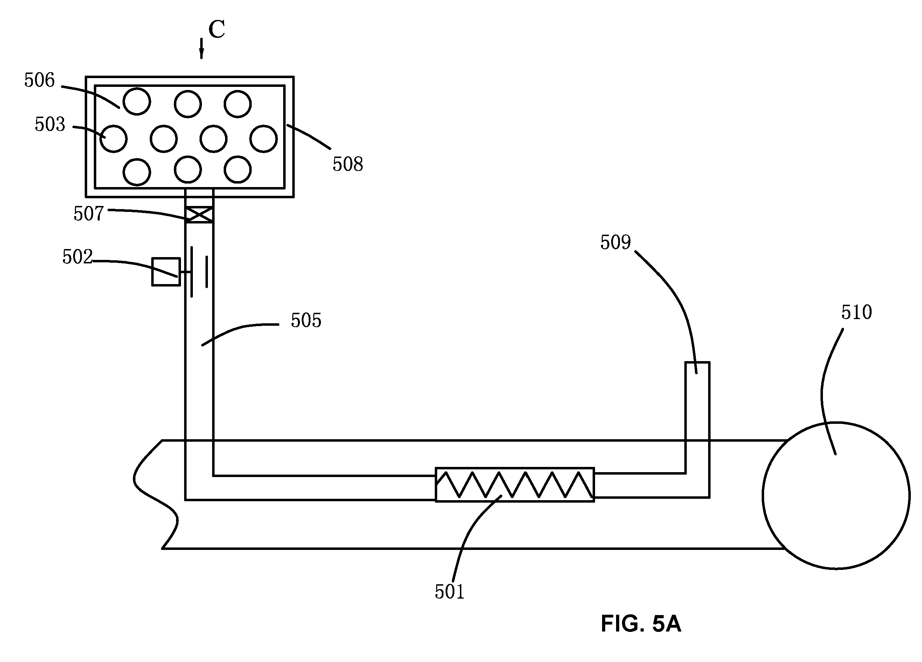

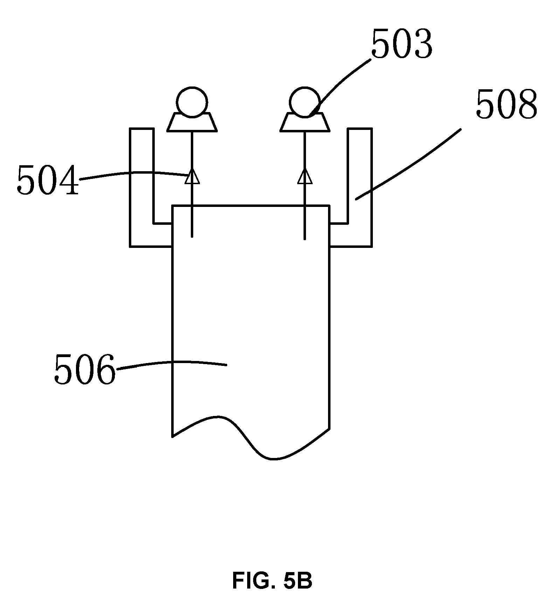

As shown in FIG. **5A** and **5B****,** in the fifth embodiment of the invention,high temperature smoke is used for power generation.

An appropriate number of heat transfer devices **501** are installed inside or on inner wall of a smoke flue of a chimney **510,** the air inlet **509** of the heat transfer device **501** is disposed at an open place outside the smoke flue, and the air outlet thereof is connected to an air intake of a bellows **506** (vertically erected at an appropriate position outside the chimney **510**) via a pipe **505.**

An appropriate number of unpowered ventilators **503** are disposed at the top of the bellows **506,** and are positioned in parallel and interlace mode. A check valve **504** is disposed at a suction opening of the unpowered ventilator **503,** and a protecting sleeve **508** capable of descending and ascending is disposed at an appropriate position at outside of the upper part of the bellows **506.** A pair of sealed bearing brackets are installed on inner wall of the pipe **505,** or outside the pipe **505,** the rotating blade of the turbo-generating set **502** is supported inside the pipe **505** by the rotor of the turbo-generating set,the power generator of the turbo-generating set **502** is disposed outside the pipe **505,** the rotor of the turbo-generating set **502** is perpendicular to the pipe **505,** and a regulating valve **507** is positioned in the part of the pipe **505** between the turbo-generating set **502** and the bellows **506.**

Thus, the heat transfer device **501** is utilized as a heat source to heat air sucked from outside, meanwhile natural wind (including breeze) is utilized as well, both of them can complement with each other for driving the unpowered ventilator **203** to rotate to produce the hot airflow with comparatively high temperature,then the hot airflow can drive the turbo-generating set **502** to generate power continuously and stably, which prevents the power generator from operating at high temperature, reducing directly its operating temperature during operation of power generator, and being convenient for maintaining and overhauling the power generator timely.

Advantages of this embodiment comprise:

1. an active hot airflow is produced without motivity in the system to generate power.

2. not only the hot airflow, but also natural wind (including breeze) can be used for power generation in the manner of a complementary heat-wind generation. Moreover, waste gas with pressure can be used for power generation.

3. the system prevents the power generator from operating at high temperature, reducing operating temperature during operation of power generator, and being convenient for maintaining and overhauling the power generator timely.

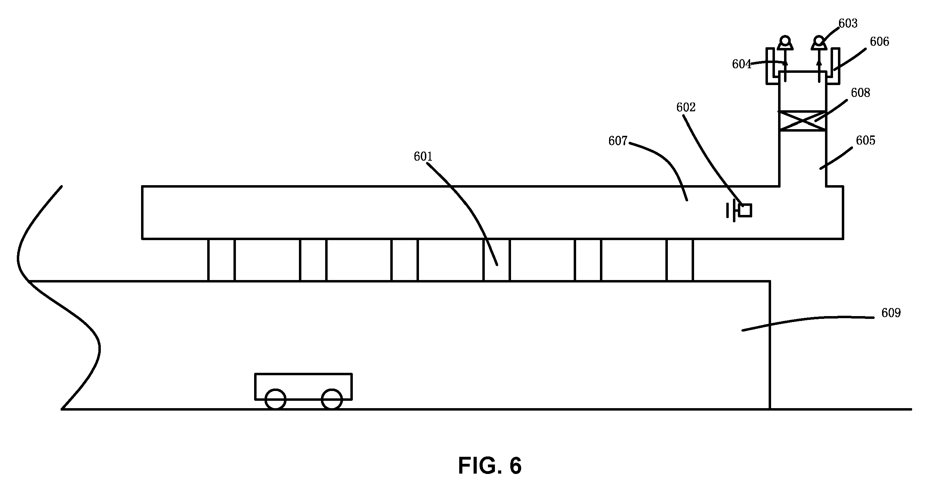

As shown in FIG. **6****,** the sixth embodiment of the invention is applied in a tunnel for vehicle, the waste hot gas inside the tunnel is discharged timely, and is utilized for power generator.

It is well-known that although multiple blowers are installed in a tunnel,air circulation in the tunnel is still difficult, especially in a long tunnel. Since a large amount of vehicles (such as trains and cars) travel in the tunnel, hot waste gas discharge thereby accumulate at the top of the tunnel, which causes temperature rise and deterioration of air quality in the tunnel.

It is an objective of this embodiment to discharge timely the hot waste air at the top of the tunnel, improve air quality in the tunnel,channel, and utilize the discharged hot waste air for power generation.

Multiple exhaust inlets **601** are positioned at the top of the tunnel **609,** and connected to the air intakes of the chimney **605** via the pipes **607** (serving as a channel), the chimney **605** is erected in open place outside the tunnel. An appropriate number of unpowered ventilators **603** are uniformly installed at the closed top of the chimney **605.** the check valves **604** are positioned at a suction opening of every unpowered ventilator **603,** a protecting sleeve **606** capable of ascending and descending is disposed at an appropriate position at outside of the upper part of the chimney **605**. Multiple turbo-generating sets **602** are disposed in the pipe **607,** and an regulating valve **608** is installed inside the part of pipe **607** between the turbo-generating set **602** and the chimney **605.**

Thus, the hot waste gas in the tunnel **609** is utilized as heat source to drive the unpowered ventilators **603** to rotate, natural wind (including breeze) is utilized as well to drive the unpowered ventilators **603** to rotate to suck in the hot waste gas continuously via the exhaust inlet **601,** and the hot airflow produced in the system drives the turbo-generating set **602** to generate power. Meanwhile, the hot waste gas accumulated at the top of the tunnel **609** is continuously discharged for keeping the air fresh.

By use of the regulating valve **608,** the flowing velocity of the airflow in the system is controled effectively As required (such as typhoon occurs), the regulating valve **608** is closed timely, and the protecting sleeve **606** is lifted,whereby protecting the equipments. Moreover, as fire accidents occur in the tunnel, after persons have safely evacuated, according to practical situation, the regulating valve **608** is closed timely for preventing air convection and combustion supporting.

In the seventh embodiment of the invention, heat produced by geotherm, hot spring, steel (boiler) workshop are utilized for power generation.

In practice, some heat is not fully utilized but wasted, for example, natural geotherm and hot spring generate large amount of heat, and steel (boiler) workshop has strong heat radiation.

An appropriate number of heat transfer devices **701** are positioned inside geotherm and hot spring, or on inner wall of steel (boiler) workshop, and are used as heat source. The air intake of the heat transfer device **701** is positioned outside, air is sucked in the heat transfer device **701** to be heated. Under the action of temperature difference and natural wind (including breeze), the heated air enters into the chimney or the bellows **703** via the pipe **702,** and drives the unpowered ventilator **704** which is positioned on the top of the chimney or the bellows **703** to rotate, and forms negative pressure in the pipe **702.** Then air is sucked continuously into the heat transfer device **701** to be heated, thus the hot airflow is formed in the pipe **702,** and drives the turbo-generating set to generate power. Meanwhile, heat inside the steel (or boiler) workshop is removed for temperature reduction.

Advantages of this embodiment comprise, in contrast with United States Patent 6,798,082:

1. no actuating device is installed between the unpowered ventilator and the turbo-generating set, which reduces energy loss caused by mechanical transmission.

2. the turbo-generating set can be disposed on any appropriate position of the system.

3. by use of the regulating valve installed in the system, the flowing velocity of the airflow is regulated effectively, then the rotate speed of the turbo-generating set is regulated.

4. an unpowered ventilator with enough exhausting capacity can drive multiple turbo-generating sets to generate power.

While particular embodiments of the invention have been shown and described, it will be obvious to those skilled in the art that changes and modifications may be made without departing from the invention in its broader aspects, and therefore, the aim in the appended claims is to cover all such changes and modifications as fall within the true spirit and scope of the invention.

## Claims

1. An airflow power generation system, comprising a gas source, a channel, at least one unpowered ventilator, and at least one turbo-generating set;
wherein
said channel comprises an airflow inlet and an airflow outlet, and said airflow inlet is connected to said gas source;
said unpowered ventilator is disposed at said airflow outlet;
said unpowered ventilator is in a natural wind field;
at least rotating blades of said turbo-generating set are positioned inside said channel; and
said unpowered ventilator operates to rotate under the action of an airflow from said gas source and/or natural wind, to form negative pressure in said channel, to intake gas continuously from said gas source, to form airflow in said channel, to push said rotating blades to rotate via said airflow, and to drive said turbo-generating set to generate power.

2. The airflow power generation system of claim 1, wherein
said gas source is hot gas, hot air produced by a heat source, gasflow with pressure, and/or air; and
said gas source comprises at least one gas source.

3. The airflow power generation system of claim 2, wherein
said heat source is a heat collection device and/or a heat exchanging device disposed in a thermal environment;
heat storage materials are disposed in said heat collection device and/or said heat exchanging device;
said heat collection device comprises a solar air heat collection device; and
said gasflow with pressure comprises exhaust pressure gasflow.

4. The airflow power generation system of claim 1, wherein
said channel comprises a vertically-disposed bellows, a vertically-disposed pipe, or a chimney; and
said unpowered ventilator is disposed at the top of said bellows, said pipe, or said chimney.

5. The airflow power generation system of claim 1, wherein
said turbo-generating set comprises a turbo generating set with at least one group of said rotating blades;
said turbo generating set is a vertical turbo generating set, or a horizontal turbo generating set;
said turbo-generating set comprises a plurality of turbo-generating set that are serially or parallel connected; and
an annular airflow fence is disposed in front of said rotating blades in said channel.

6. The airflow power generation system of claim 1, wherein
said rotating blades of said turbo-generating set are supported inside said channel by a rotor of said turbo-generating set; and
other components of said turbo-generating set are disposed inside or outside said channel.

7. The airflow power generation system of claim 1, wherein
an airflow control device or a valve is disposed in said channel, or at a suction opening of said unpowered ventilator;
a protecting sleeve capable of ascending and descending is disposed outside said unpowered ventilator, or outside a connection part between said unpowered ventilator and said channel.

8. The airflow power generation system of claim 1, wherein
at least one bypass system is disposed at said channel where said turbo-generating set is positioned, the bypass system comprising a heat transfer device.

9. The airflow power generation system of claim 2, wherein
said heat source is produced by metal pipes absorbing heat from a high-temperature object;
an air intake of said metal pipes is far away from said high-temperature object;
an air outlet of said metal pipes is connected to said channel; said channel comprises a vertical bellows and a pipe connecting said bellows with said metal pipes;
said unpowered ventilators are disposed at the top of said bellows; said rotating blades of said turbo-generating set are positioned inside said pipe;
said heat source further comprises a solar air heat collection device;
an outlet of said solar air heat collection device is connected to an air intake of said metal pipes; and
said air intake of said metal pipes is connected to said outlet of said solar air heat collection device via a second valve;
said air outlet of said metal pipes is connected to said bellows via a third valve; and
a pair of first valves are disposed at a front end and a back end of said rotating blades of said turbo-generating set in said pipe.

10. An airflow power generation method, comprising:
S1: providing a gas source for producing airflow;
S2: a channel being connected to said gas source, said airflow entering said channel via an airflow inlet of said channel;
S3: providing at least one unpowered ventilator, said unpowered ventilator being connected to an airflow outlet of said channel; and
said unpowered ventilator rotating under the action of an airflow from said gas source and/or natural wind,forming negative pressure in said channel, intaking gas continuously from said gas source, and forming airflow in said channel;
S4: providing a turbo-generating set, at least rotating blades of said turbo-generating set being positioned inside said channel, said airflow generated in step S3 driving said rotating blades to rotate thereby driving said turbo-generating set to generate power.
